# EUROPEAN PATENT APPLICATION

(11) **EP 2 505 874 A1**
(43) Date of publication of application: **03.10.2012**
(21) Application number: 10832838.6
(22) Date of filing: 24.11.2010
(51) Int. Cl.: F16H 3/093, B60K 6/36, B60K 6/48, B60K 6/547

(54) **POWER TRANSMISSION DEVICE**

(30) Priority: 26.11.2009 JP 2009268300
(71) Applicant: AISIN AI Co., Ltd., Nishio-shi Aichi-ken 445-0006 (JP)
(72) Inventor: OGINO, Daizo, Nishio-shi Aichi 445-0006 (JP); SASAKI, Kan, Nishio-shi Aichi 445-0006 (JP); MIYANO, Hirokuni, Nishio-shi Aichi 445-0006 (JP)
(74) Representative: Winter, Brandl, Fürniss, Hübner, Röss, Kaiser, Polte - Partnerschaft
(86) International application number: PCT/JP2010/006838
(87) International publication number: WO 2011/064985

(57) **Abstract**

A power switcher mechanism (3) according to the present invention is characterized in that it includes an input shaft (41), a first output shaft (42), a second output shaft (43), a first gear set (5) and a second gear set (6), and in that one of first-input-shaft gears for change-speed stages of the first gear set (5), that is, the first-input-shaft gear (412), is positioned between two second-input-shaft gears (413, 414) of the second gear set (6) in the axial direction of the input shaft (41).

## Description

### TECHNICAL FIELD

The present invention relates to a power transmission apparatus.

### BACKGROUND ART

For one of power transmission apparatuses that convert rotary powers, which are obtainable from power sources such as internal combustion engines and motors, so as to be the proper running speeds of vehicle in order to transmit them to the wheels, there is one which is like Patent Literature No. 1, for instance.

Incidentally, power transmissions apparatuses have limitations on the mounting position and space, due to the relationships between various factors, such as the size of vehicle having them on-board, the size of power source and the type and constitution of power source. Moreover, there also are requests nowadays for making them lightweight or compact, for the purpose of fuel-consumption improvement.

### Related Technical Literature

### Patent Literature

Patent Literature No. 1: Japanese Unexamined Patent Publication (KOKAI) Gazette No. 2009-185,981

### DISCLOSURE OF THE INVENTION

### Assignment to be Solved by the Invention

The present invention is one which has been done in view of the aforementioned assignments. It is an assignment to be solved to provide a power transmission apparatus that can shorten the overall length more than that of conventional ones, or that can inhibit the overall length from extending.

### Means for Solving the Assignment

Constitutional characteristics of the invention being directed to claim 1 for solving the aforementioned assignment lie in that it comprises:
an input shaft into which rotary powers are input;
a first output shaft and a second output shaft into which said rotary powers are input by way of said input shaft, and whose axial directions are put in place parallelly to an axial direction of said input shaft;
a first gear set having two change-speed stages with distinct change gear ratios, and a change-speed stage selector device;
the two change-speed stages comprising: two first-input-shaft gears being capable of rotating integrally with respect to said input shaft, and being disposed adjacently to each other axially; and two first-output-shaft gears being disposed so as to be capable of rotating idly with respect to said first output shaft so that they always mesh with each of said two first-input-shaft gears;
the change-speed stage selector device being capable of rotating integrally with respect to said first output shaft and being positioned between said two first-output-shaft gears, the change-speed stage selector device comprising: a change-speed stage selection state in which it is connected to either one of said two first-output-shaft gears to be capable of rotating integrally therewith; and a neutral state in which it is not connected to any one of said two first-output-shaft gears to be capable of rotating integrally therewith;
a second gear set having two change-speed stages with distinct change gear ratios, and a change-speed stage selector device:
   the two change-speed stages comprising: two second-input-shaft gears being capable of rotating integrally with respect to said input shaft, and being disposed adjacently to each other axially; and two second-output-shaft gears being disposed so as to be capable of rotating idly with respect to said second output shaft so that they always mesh with each of said two second-input-shaft gears;
   the change-speed stage selector device being capable of rotating integrally with respect to said second output shaft and being positioned between said two second-output-shaft gears, the change-speed stage selector device comprising: a change-speed stage selection state in which it is connected to either one of said two second-output-shaft gears to be capable of rotating integrally therewith; and a neutral state in which it is not connected to any one of said two second-output-shaft gears to be capable of rotating integrally therewith; and
   one of said first-input-shaft gears for said change-speed stages of said first gear set is positioned between said two second-input-shaft gears of said second gear set in the axial direction of said input shaft.

Moreover, constitutional characteristics of the invention being directed to claim 2 lie in that, in claim 1, it further comprises:
a power switcher mechanism that can switch said rotary powers to be capable of being supplied from an internal combustion engine and/or a rotary electric appliance, and that can switch said rotary electric appliance to be supplied from said rotary electric appliance to said input shaft, or to said first output shaft;
said first output shaft comprises a first driven gear being capable of rotating integrally therewith;
said second output shaft comprises a second driven gear being capable of rotating integrally therewith, the second driven gear to be put in place at the same position as that of said first driven gear axially; and
said input shaft comprises a transmission gear being capable of rotating idly thereto, and being put in place at the same position as those of said first driven gear and said second driven gear axially, transmission gear into which said rotary powers from said rotary electric appliance are input by means of said power switcher mechanism, and transmission gear which always meshes with said first driven gear.

Moreover, constitutional characteristics of the invention being directed to claim 3 lie in that, in claim 2, it further comprises:
a reverse idler shaft whose axial direction is put in place parallelly to the axial direction of said input shaft; and
a reverse gear set having a reverse change-speed stage, and a change-speed stage selector device:
   the reverse change-speed stage comprising: a reverse-handling gear, which is capable of rotating integrally with respect to said input shaft; and a reverse gear, which is disposed so as to be capable of rotating idly with respect to said reverse idler shaft so that it always meshes with said reverse-handling gear;
   the change-speed stage selector device comprising: a change-speed stage selection state in which it is capable of moving axially with respect to said reverse idler shaft, and in which it is connected to said reverse gear to be capable of rotating integrally therewith; and a neutral state in which it is not connected to said reverse idler shaft to be capable of rotating integrally therewith; and
   said reverse idler shaft comprises a reverse idler gear being capable of rotating integrally therewith, reverse idler gear which always meshes with said first driven gear.

Moreover, a constitutional characteristic of the invention being directed to claim 4 lies in that, in claim 3, said reverse-handling gear is one of said first-input-shaft gears.

Moreover, constitutional characteristics of the invention being directed to claim 5 lie in that, in either one of claims 1 through 4, it further comprises:
a third gear set having a change-speed stage with a change gear ratio that is distinct from those of said first and second gear sets, and a change-speed stage selector device;
the change-speed stage comprising: a third-input-shaft gear being capable of rotating integrally with respect to said input shaft; and a third-output-shaft gear being disposed so as to be capable of rotating idly with respect to said first output shaft so that it always meshes with said third-input-shaft gear;
the change-speed stage selector device comprising: a change-speed stage selection state in which it is capable of moving axially with respect to said first output shaft, and in which it is connected with respect to said third-output-shaft gear to be capable of rotating integrally therewith; and a neutral state in which it is not connected to said third-output-shaft gear to be capable of rotating integrally therewith; and
said third-input-shaft gear is one of said second-input-shaft gears.

### Effect of the Invention

In the invention being directed to claim 1, one of the first-input-shaft gears for the change-speed stages of the first gear set is positioned between the two second-input-shaft gears of the second gear set in the axial direction of the input shaft. In different gear sets, one of them do not usually have gears that are put in place between the other's gears. Hence, in accordance with the invention being directed to claim 1, since one of the gear set's one of the gears is positioned between the other gear set's gears in the axial direction, an axial length shortens. That is, it is possible to shorten a power transmission apparatus's overall length.

In the invention being directed to claim 2, it is feasible to supply the rotary powers from an internal combustion engine and/or a rotary electric appliance, and it is feasible to supply the rotary electric appliance's rotary powers to the input shaft, an upstream side in the power transmission apparatus, or to the first output shaft, a downstream side in the power transmission apparatus. The power switcher mechanism carries out the switching between the supplying sources of the rotary powers, and the switching between the supplying points or destinations of the rotary electric appliance's rotary powers. Even in so-called hybrid vehicles which use a rotary electric appliance as well, in addition to an internal combustion engine, as the power source, it is possible to inhibit the overall length from extending axially by axially superimposing the gear sets, which are to be put in place onto the distinct shafts, even when the rotary electric appliance and the power switcher mechanism are added.

Moreover, since the first driven gear, the second driven gear, and the transmission gear are put in place at the same position with each other in the axial direction, an axial length shortens.

In the invention being directed to claim 3, a reverse idler shaft for reversing vehicle is put in place parallelly to the input shaft, and a reverse idler gear always meshes with the second driven gear. The axial extension is inhibited by constituting thusly, because it is possible to put the first driven gear, the second driven gear and the transmission gear in place at the same position with each other in the axial direction.

In accordance with the invention being directed to claim 4, since one of the first-input-shaft gears of the first gear set is employed as the reverse-handling gear for the reverse change-speed stage, the reverse gear, and one of the change-speed stages of the first gear set come to be present at the same position with each other axially, and thereby an axial length shortens.

In accordance with the invention being directed to claim 5, since the change-speed stage of the third gear set whose change gear ratio is distinct from those of the change-speed stages of the first gear set and second gear set, and one of the change-speed stages of the second gear set use one of the gears on the input shaft in a shared manner, an axial length shortens.

### BRIEF DESCRIPTION OF THE DRAWINGS

Fig. 1 is a skeleton diagram that explains a constitution of a power transmission apparatus 11 according to a present embodiment mode;
Fig. 2 is an explanatory diagram that expresses apart of the constitution of the power transmission apparatus 11 according to the present embodiment mode in a cross-sectional diagram; and
Fig. 3 is a skeleton diagram that explains operations of the power transmission apparatus 11 according to the present embodiment mode.

### Explanation on Reference Numerals

1: Ordinary Clutch; 11: Power Transmission Apparatus;
2: Motor (i.e., Rotary Electric Appliance); 21: Rotor; 22: Stator; 23: Output Unit;
3: Power Switcher Mechanism; 31:Motor Input Gear; 32: Transmission Gear; 33: Sleeve;
41: Input Shaft; 411, 412: First-input-shaft Gears; 413, 414: Second-input-shaft Gears;
42: First Output Shaft; 421: First Driven Gear; 422: First-output-shaft Output Gear; 423, 424: First-output-shaft Gears; 424: First-output-shaft Gear;
43: Second Output Shaft; 431: Second Driven Gear; 432: Second-output-shaft Output Gear; 433, 434: Second-output-shaft Gears;
44: Reverse Idler Shaft; 441: Reverse Idler Gear; 442: Reverse Gear;
5: First Gear Set; 52: Change-speed Stage Selector Device; 53: Hub; 54: Sleeve;
6: Second Gear Set; 62: Change-speed Stage Selector Device; 63: Hub; 64: Sleeve;
7: Third Gear Set; 72: Change-speed Stage Selector Device; 73: Hub; 84: Sleeve;
8: Reverse Gear Set; 82: Change-speed Stage Selector Device; 83: Hub; 84: Sleeve;
9: Differential Shaft; and 91: Terminal Gear

### BEST MODE FOR CARRYING OUT THE INVENTION

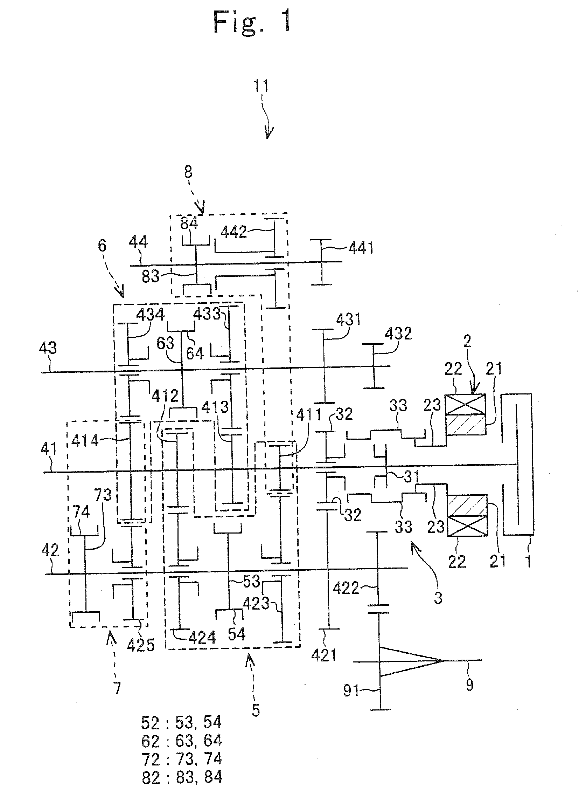

A representative embodiment according to the present invention will be explained with reference to Fig. 1 through Fig. 3. A power transmission apparatus being directed to the present embodiment is mounted on vehicles.

### (Embodiment)

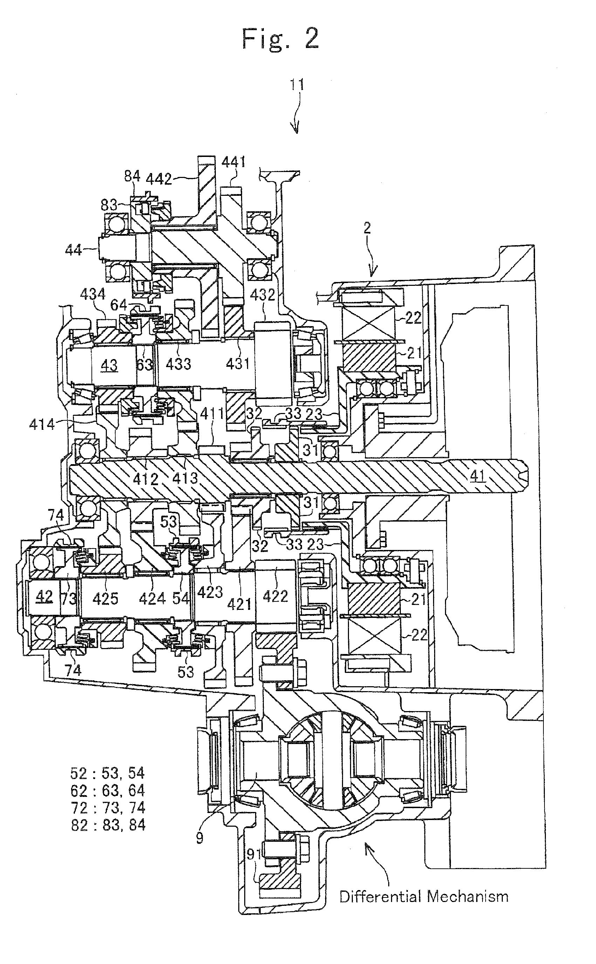

As illustrated in Fig. 1 through Fig. 3, a power transmission apparatus 11 according to the present embodiment mode comprises an ordinary clutch 1, amotor (i.e., a rotary electric appliance) 2, a power switcher mechanism 3, an input shaft 41, a first output shaft 42, a second output shaft 43, a reverse idler shaft 44, a first gear set 5, a second gear set 6, a third gear set 7, and a reverse gear set 8. In Fig. 2, the diagrammatic representation of the ordinary clutch 1 is abbreviated.

The ordinary clutch 1 is a member that carries out the connection and disconnection between an internal combustion engine (not shown), one of power sources, and the input shaft 41 being described later.

The input shaft 41 is coupled with the ordinary clutch 1 at one of the opposite ends, and is supported rotatably to a case (not shown) for the power transmission apparatus 11, or to a member being fixed to the case, at the other one of the opposite ends.

The motor 2 comprises a rotor 21 in which the input shaft 41 makes the rotational center, a stator 22 being positioned on the outer circumferential side of the rotor 21, and an output unit 23 rotating integrally with the rotor 21; and is put in place at a position interposing the ordinary clutch 1 between itself and the internal combustion engine. The stator 22 is fixed to the case for the power transmission apparatus 11, or to a member being fixed to the case. The output unit 23 always engages with a sleeve 33 of the power switcher mechanism 3 being described later.

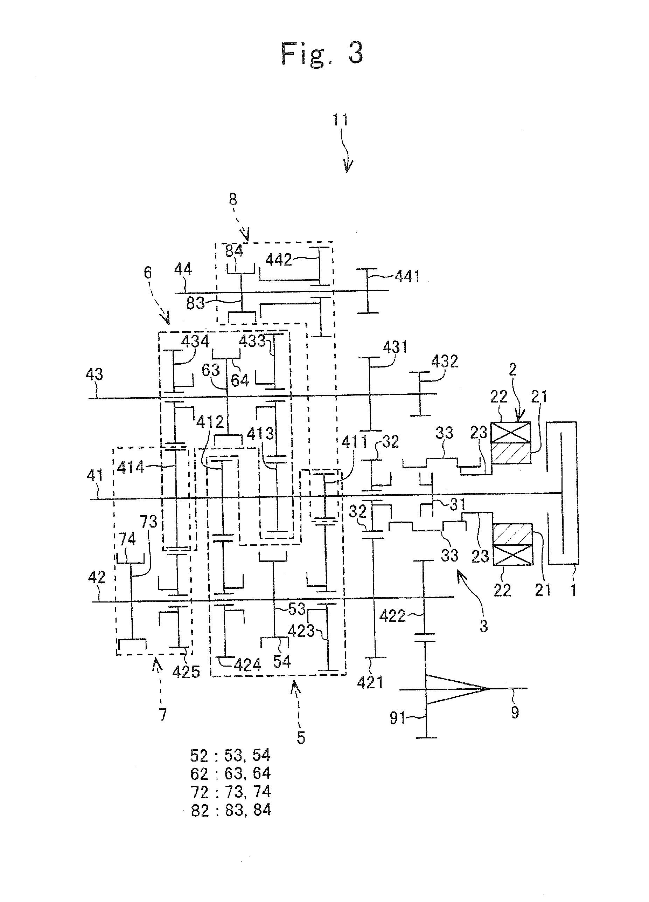

The power switcher mechanism 3 comprises a motor input gear 31, and a transmission gear 32, from a side of the motor 2 in the axial direction; and further comprises the sleeve 33 being positioned on the outer circumferential side of the motor input gear 31. The motor input gear 31 rotates integrally with the input shaft 41, and is capable of engaging with the inner circumferential side of the sleeve 33 on the outer circumferential side. The transmission gear 32 rotates idly with respect to the input shaft 41, but always meshes with a first driven gear 421 rotating integrally with the first output shaft 42 being described later. And, the motor 2 is capable of axially engaging with the inner circumferential side of the sleeve 33 partially on the outer circumference side. In the state where the motor 2 always engages with the output unit 23 of the motor 2 on the inner circumferential side, the sleeve 33 moves in the axial direction of the input shaft 41. Since the sleeve 33 moves axially, it engages with the motor input gear 31, and with the transmission gear 32 to be capable of rotating integrally with them. The power switcher mechanism 3 comprises a neutral state where the sleeve 33 engages with the output unit 23 alone, an input-shaft connection state where the sleeve 33 engages with the output unit 23 and with the motor input gear 31, and an output-shaft connection state where the sleeve 33 engages with the output unit 23 and with the transmission gear 32. In Fig. 1, the power switcher mechanism 3 exhibits the neutral state. According to Fig. 3, the input-shaft connection state of the power switcher mechanism 3, and the output-shaft connection state are represented diagrammatically. A position of the sleeve 33, which is present on an upper side than is the input shaft 41, shows the input-shaft connection state, and another position of the sleeve 33, which is present on a lower side than is the input shaft 41, shows the output-shaft connection state.

The first output shaft 42 is put in place so that the axial direction becomes parallel to the input shaft 41, and is supported rotatably to the case for the power transmission apparatus 11, or to a member being fixed to the case, at the opposite ends. And, on one of the axial sides of the ordinary clutch 1, it comprises the first driven gear 421 and a first-output-shaft output gear 422 that rotate integrally therewith. The first driven gear 421 always meshes with the transmission gear 32 of the power switcher mechanism 3. The first-output-shaft output gear 422 is positioned more adjacently to the side of the ordinary clutch 1 than is the first driven gear 421 in the axial direction, and always meshes with a terminal gear 91 of a differential shaft 9 of a differential mechanism that transmits rotary powers, which are transmitted by way of the power transmission apparatus 11, to all of the wheels of a vehicle.

The second output shaft 43 is put in place so that the axial direction becomes parallel to the input shaft 41, and is supported rotatably to the case for the power transmission apparatus 11, or to a member being fixed to the case, at the opposite ends. And, on one of the axial sides of the ordinary clutch 1, it comprises a second driven gear 431 and a second-output-shaft output gear 432 that rotate integrally therewith. The second driven gear 431 always meshes with a reverse idler gear 441 of the reverse idler shaft 44 being described later. The second-output-shaft output gear 432 is positioned more adjacently to the side of the ordinary clutch 1 than is the second driven gear 431 in the axial direction, and always meshes with the terminal gear 91.

The reverse idler shaft 44 is put in place so that the axial direction becomes parallel to the input shaft 41, and is supported rotatably to the case for the power transmission apparatus 11, or to a member being fixed to the case, at the opposite ends. And, on one of the axial sides of the ordinary clutch 1, it comprises the reverse idler gear 441 that rotates integrally therewith. The reverse idler gear 441 always meshes with the second driven gear 431 of the second output shaft 43.

The first gear set 5 comprises two change-speed stages, and a change-speed stage selector device 52 that selects either one of those two change-speed stages. The change-speed stages are a combination of one of the first-input-shaft gears being capable of rotating integrally with respect to the input shaft 41, and one of the first-output-shaft gears being capable of rotating idly with respect to the first output shaft 42, and always meshing with the first-input-shaft gears, respectively; and are put in place in a quantity of two so as to interpose the change-speed stage selector device 52 between them axially. The change-speed stages have a distinct change gear ratio, respectively; one of the change-speed stages on the side of the ordinary clutch 1 is a combination of the first-input-shaft gear 411 and first-output-shaft gear 423; and another one of the change-speed stages adjacent to the intervening change-speed stage selector device 52 is another combination of the first-input-shaft gear 412 and first-output-shaft gear 424. The change-speed stage selector device 52 comprises: a hub 53 being positioned between the first-output-shaft gear 423 and the first-output-shaft gear 424 in the axial direction, and rotating integrally with the first output shaft 42; and a sleeve 54 being positioned on the outer circumferential side of the hub 53, and being capable of rotating integrally with the hub 53 as well as being capable of moving axially. The sleeve 54 moves axially, and then engages with the first-output-shaft gear 423, or with the first-output-shaft gear 424. The change-speed stage selector device 52 comprises: a neutral state, that is, a state where the sleeve 54 does not engage with either one of the gears so that either one of the change-speed stages is not selected; a first-speed stage selection state where the sleeve 54 engages with the first-output-shaft gear 423 to be capable of rotating integrally therewith; and a third-speed stage selection state where the sleeve 54 engages with the first-output-shaft gear 424 to be capable of rotating integrally therewith.

The second gear set 6 comprises two change-speed stages, and a change-speed stage selector device 62 that selects either one of those two change-speed stages. The change-speed stages are a combination of one of the second-input-shaft gears being capable of rotating integrally with respect to the input shaft 41, and one of the second-output-shaft gears being capable of rotating idly with respect to the second output shaft 43, and always meshing with the second-input-shaft gears, respectively; and are put in place in a quantity of two so as to interpose the change-speed stage selector device 62 between them axially. The change-speed stages have a distinct change gear ratio, respectively; one of the change-speed stages on the side of the ordinary clutch 1 is a combination of the second-input-shaft gear 413 and second-output-shaft gear 433; and another one of the change-speed stages adjacent to the intervening change-speed stage selector device 62 is another combination of the second-input-shaft gear 414 and second-output-shaft gear 434. The change-speed stage selector device 62 comprises: a hub 63 being positioned between the second-output-shaft gear 433 and the second-output-shaft gear 434 in the axial direction, and rotating integrally with the second output shaft 43; and a sleeve 64 being positioned on the outer circumferential side of the hub 63, and being capable of rotating integrally with the hub 63 as well as being capable of moving axially. The sleeve 64 moves axially, and then engages with the second-output-shaft gear 433, or with the second-output-shaft gear 434. The change-speed stage selector device 62 comprises: a neutral state, that is, a state where the sleeve 64 does not engage with either one of the gears so that either one of the change-speed stages is not selected; a second-speed stage selection state where the sleeve 64 engages with the second-output-shaft gear 433 to be capable of rotating integrally therewith; and a fourth-speed stage selection state where the sleeve 64 engages with the second-output-shaft gear 434 to be capable of rotating integrally therewith.

The first input-shaft gear 412 for the third change-speed stage of the first gear set 5 is positioned between the second-input-shaft gear 413 and second-input-shaft gear 414 of the second gear set 6 in the axial direction.

The third gear set 7 comprises one and only change-speed stage, and a change-speed stage selector device 72 that selects or does not select the one and only change-speed stage. The change-speed stage is a combination of the second-input-shaft gear 414 (i.e., a third-input-shaft gear) and a third-output-shaft gear 425 that always meshes with the second-input-shaft gear 414, thereby making a fifth-speed stage. The change-speed stage selector device 72 comprises: a hub 73 being positioned more away from the side of the ordinary clutch 1 than is the third-output-shaft gear 425 in the axial direction, and being capable of rotating integrally with the first output shaft 42; and a sleeve 74 being positioned on the outer circumferential side of the hub 73, and being capable of rotating integrally with the hub 73 as well as being capable of moving axially. The sleeve 74 moves axially, and comprises: a fifth-speed selection state where the sleeve 74 engages with the third-output-shaft gear 425; and a neutral state where the sleeve 74 does not engage with the third-output-shaft gear 425.

The second-input-shaft gear 414 for the fifth-speed stage of the third gear set 7 uses that for the fourth-speed stage of the second gear set 6 in a shared manner. To put it differently, the second-input-shaft gear 414 always meshes not only with the second-output-shaft gear 434 but also with the third-output-shaft gear 425.

The reverse gear set 8 comprises a reverse change-speed stage, and a change-speed stage selector device 82 that selects or does not select that reverse change-speed stage. The reverse change-speed stage is a combination of the first-input-shaft gear 411 (i.e., a reverse-handling gear) and a reverse gear 442 being disposed to be capable of rotating idly with respect to the reverse idler shaft 44, and always meshing with the first-input-shaft gear 411, thereby making a change-speed stage for reversing vehicle. The change-speed stage selector device 82 comprises: a hub 83 being positioned more away from the side of the ordinary clutch 1 than is the reverse gear 442 in the axial direction, and being capable of rotating integrally with the reverse idler shaft 44; and a sleeve 84 being positioned on the outer circumferential side of the hub 83, and being capable of rotating integrally with the hub 83 as well as being capable of moving axially. The sleeve 84 moves axially, and comprises: a reverse change-speed selection state where the sleeve 84 engages with the reverse gear 442; and a neutral state where the sleeve 84 does not engage with the reverse gear 442.

The first-input-shaft gear 441 for the reverse change-speed stage of the reverse gear set 8 uses that for the first-speed stage of the first gear set 5 in a shared manner. To put it differently, the first-input-shaft gear 441 always meshes not only with the first-output-shaft gear 423 but also with the reverse gear 442.

Next, explanations will be made on operations of the power transmission apparatus 11.

The power transmission apparatus 11 according to the present embodiment mode has the two, the internal combustion engine and the motor 2, as the power sources, and can cause vehicles to run by the internal combustion engine alone, by the motor 2 alone, or by both of the internal combustion engine and motor 2. First of all, in the case of the internal combustion engine alone, the ordinary clutch 1 is put in the connected state, and the power switcher mechanism 3 is put in the neutral state. The input shaft 41 is rotated by means of rotary powers of the internal combustion engine, and the rotary powers are converted to a change gear ratio of the selected change-speed stage. In the case of the motor 2 alone, the ordinary clutch 1 is put in the disconnected state, and the power switcher mechanism 3 is put in the input-shaft connection state. Rotary powers of the motor 2 are transmitted to the input shaft 41 by way of the power switcher mechanism 3 and the motor input gear 31, and are converted to a change gear ratio of the selected change-speed stage. In the case of both of the internal combustion engine and motor 2, the ordinary clutch 1 is put in the connected state, and the power switcher mechanism 3 is put in the input-shaft connection state. Rotary powers of the internal combustion engine are transmitted to the input shaft 41, and rotary powers of the motor 2 are also transmitted to the input shaft 41.

Next, a route in which the rotary powers being transmitted to the input shaft 41 are transmitted from the terminal gear 91 to the differential gear 9 will be explained for each of the change-speed stages.

In the case of the first-speed stage, the change-speed stage selector device 52 of the first gear set 5 is put in the first-speed stage selection state, and the change-speed stage selector devices of the other gear sets are put in the neutral state, respectively. Since the first-output-shaft gear 423 is in the state of being capable of rotating integrally with the first output shaft 42, the rotary powers being transmitted to the input shaft 41 are transmitted to the first output shaft 42 by way of the first-input-shaft gear 411 and the first-output-shaft gear 423. The rotary powers being transmitted to the first output shaft 42 are transmitted to the terminal gear 91 from the first-output-shaft output gear 422, and then arrive at the differential shaft 9.

In the case of the second-speed stage, the change-speed stage selector device 62 of the second gear set 6 is put in the second-speed stage selection state, and the change-speed stage selector devices of the other gear sets are put in the neutral state, respectively. Since the second-output-shaft gear 433 is in the state of being capable of rotating integrally with the second output shaft 43, the rotary powers being transmitted to the input shaft 41 are transmitted to the second output shaft 43 by way of the second-input-shaft gear 413 and the second-output-shaft gear 433. The rotary powers being transmitted to the second output shaft 43 are transmitted to the terminal gear 91 from the second-output-shaft output gear 432, and then arrive at the differential shaft 9.

In the case of the third-speed stage, the change-speed stage selector device 52 of the first gear set 5 is put in the third-speed stage selection state, and the change-speed stage selector devices of the other gear sets are put in the neutral state, respectively. Since the first-output-shaft gear 424 is in the state of being capable of rotating integrally with the first output shaft 42, the rotary powers being transmitted to the input shaft 41 are transmitted to the first-output shaft 42 by way of the first-input-shaft gear 412 and the first output-shaft gear 424. The rotary powers being transmitted to the first output shaft 42 are transmitted to the terminal gear 91 from the first-output-shaft output gear 422, and then arrive at the differential shaft 9.

In the case of the fourth-speed stage, the change-speed stage selector device 62 of the second gear set 6 is put in the fourth-speed stage selection state, and the change-speed stage selector devices of the other gear sets are put in the neutral state, respectively. Since the second-output-shaft gear 434 is in the state of being capable of rotating integrally with the second output shaft 43, the rotary powers being transmitted to the input shaft 41 are transmitted to the second output shaft 43 by way of the second-input-shaft gear 414 and the second-output-shaft gear 434. The rotary powers being transmitted to the second output shaft 43 are transmitted to the terminal gear 91 from the second-output-shaft output gear 432, and then arrive at the differential shaft 9.

In the case of the fifth-speed stage, the change-speed stage selector device 72 of the third gear set 7 is put in the fifth-speed stage selection state, and the change-speed stage selector devices of the other gear sets are put in the neutral state, respectively. Since the third-output-shaft gear 525 is in the state of being capable of rotating integrally with the first output shaft 42, the rotary powers being transmitted to the input shaft 41 are transmitted to the first output shaft 42 by way of the second-input-shaft gear 414 and the third-output-shaft gear 425. The rotary powers being transmitted to the first output shaft 42 are transmitted to the terminal gear 91 from the first-output-shaft output gear 422, and then arrive at the differential shaft 9.

In the case of the reverse change-speed stage, the change-speed stage selector device 82 of the reverse gear set 8 is put in the reverse change-speed stage selection state, and the change-speed stage selector devices of the other gear sets are put in the neutral state, respectively. Since the reverse idler shaft 44 is in the state of being capable of rotating integrally with the reverse gear 442, the rotary powers being transmitted to the input shaft 41 are transmitted to the reverse idler shaft 44 by way of the first-input-shaft gear 411 and the reverse gear 442. The rotary powers being transmitted to the reverse idler shaft 44 are transmitted to the second output shaft 43 from the reverse idler gear 441, are then transmitted to the terminal gear 91 from the second-output-shaft output gear 432 of the second output shaft 43, and eventually arrive at the differential shaft 9.

Moreover, the power transmission apparatus 11 according to the present embodiment mode makes it feasible to run vehicles by transmitting outputs from the motor 2 to a side of the output shafts under the circumstances where any one of the aforementioned change-speed stages is not selected, that is, without the intervention of the input shaft 41, in the case where only the motor 2 is adapted into the power source. If such is the case, the ordinary clutch 1 is put in the disconnected state, and the power switcher mechanism 3 is put in the output-shaft connection state. The rotary powers of the motor 2 are transmitted to the transmission gear 32 that engages with the power switcher mechanism 3. Since the transmission gear 32 always meshes with the first driven gear 421 of the first output shaft 42, the rotary powers rotate the first output shaft 42 by way of the first driven gear 421, are then transmitted to the terminal gear 91 from the first-output-shaft output gear 422, and eventually rotate the differential shaft 9. While switching the change-speed stages having predetermined change gear ratios, the rotary powers being transmitted to the input shaft 41 are interrupted to be transmitted to the side of wheels. On that occasion, since the rotary powers of the motor 2 are transmitted to the first output shaft 42 directly, such amenity during boarding vehicles as inhibiting the vehicles' running speeds from decreasing, or alleviating change-speed shocks that result from switching the change-speed stages, upgrades.

In addition, the power transmission apparatus 11 according to the present embodiment mode makes it feasible to start the internal combustion engine as well by means of the rotary forces of the motor 2 by putting the power switcher mechanism 3 in the input-shaft connection state and putting the ordinary clutch 1 in the connected state when the internal combustion engine is being stopped. Hence, it is possible to intend to make vehicles lightweight without mounting any starter for starting the internal combustion engine on the vehicles.

In accordance with the power transmission apparatus 11 according to the present embodiment mode, since the first-input-shaft gear 412 for the third-speed stage of the first gear set 5 is positioned between the two gears of the second gear set 6, the second-input-shaft gear 413 and the second-input-shaft gear 414, in the axial direction of the input shaft 41, the axial length of the power transmission apparatus 11 shortens. To put it differently, the overall length of the power transmission apparatus 11 shortens.

In the power transmission apparatus 11 according to the present embodiment mode, the rotary powers are supplied from the two types, the internal combustion engine and the motor 2, and it comprises the power switcher mechanism 3 that can supply the rotary powers to the input shaft 41, or to the first output shaft 42 without the intervention of the input shaft 41. In such a constitution, although it usually comes to be extended axially when the motor 2 as well as the power switcher mechanism 3, which also carries out the switching of the motor 2 and the powers, are put in place, it is possible to inhibit the extension in the axial direction by axially superimposing the gear sets 5 and 6, which are to be put in place on distinct shafts respectively.

And, in the power transmission apparatus 11 according to the present embodiment mode, since the reverse idler shaft 44 for reversing vehicle is put in place parallelly to the input shaft 41, and since the reverse idler gear 441 always meshes with the second driven gear 431, the first driven gear 421, the second driven gear 431, and the transmission gear 32 are put in place at the same position with each other axially (or they do not deviate from each other axially). Hence, the extension in the axial direction is inhibited.

Moreover, the power transmission apparatus 11 according to the present embodiment mode employs the first-input-shaft gear 411 of the first gear set 5 as the reverse-handling gear 442 for the reverse change-speed stage. Consequently, the axial length shortens because the reverse-handling gear 442 and one of the change-speed stages of the first gear set 5 come to be present at the same position with each other axially.

In addition, in the power transmission apparatus 11 according to the present embodiment mode, the fifth-speed stage of the third gear set 7, whose change gear ratio is distinct from those of the change-speed stages of the first gear set 5 and second gear set 6, employs the second-input-shaft gear 414 for the fourth-speed stage of the second gear set 6. To put it differently, the change-speed stages of the second gear set 6 and third gear set 7 use one of the gears on the input shaft 41 in a shared manner. Hence, even when the change-speed stages should have increased (or the change-speed stages should have been provided in greater numbers), the axial length shortens because some of the gears are used in a shared manner.

Although explanations have been made so far on one of the preferred embodiments according to the present invention, the present invention is not one which is limited to the aforementioned embodiment mode. For example, it is feasible to combine the respective change-speed stages of the first gear set 5 through the third gear set 7 otherwise, in addition to those aforementioned.

## Claims

1. A power transmission apparatus being **characterized in that** it comprises:
an input shaft into which rotary powers are input;
a first output shaft and a second output shaft into which said rotary powers are input by way of said input shaft, and whose axial directions are put in place parallelly to an axial direction of said input shaft;
a first gear set having two change-speed stages with distinct change gear ratios, and a change-speed stage selector device;
the two change-speed stages comprising: two first-input-shaft gears being capable of rotating integrally with respect to said input shaft, and being disposed adjacently to each other axially; and two first-output-shaft gears being disposed so as to be capable of rotating idly with respect to said first output shaft so that they always mesh with each of said two first-input-shaft gears;
the change-speed stage selector device being capable of rotating integrally with respect to said first output shaft and being positioned between said two first-output-shaft gears, the change-speed stage selector device comprising: a change-speed stage selection state in which it is connected to either one of said two first-output-shaft gears to be capable of rotating integrally therewith; and a neutral state in which it is not connected to any one of said two first-output-shaft gears to be capable of rotating integrally therewith;
a second gear set having two change-speed stages with distinct change gear ratios, and a change-speed stage selector device:
the two change-speed stages comprising: two second-input-shaft gears being capable of rotating integrally with respect to said input shaft, and being disposed adjacently to each other axially; and two second-output-shaft gears being disposed so as to be capable of rotating idly with respect to said second output shaft so that they always mesh with each of said two second-input-shaft gears;
the change-speed stage selector device being capable of rotating integrally with respect to said second output shaft and being positioned between said two second-output-shaft gears, the change-speed stage selector device comprising: a change-speed stage selection state in which it is connected to either one of said two second-output-shaft gears to be capable of rotating integrally therewith; and a neutral state in which it is not connected to any one of said two second-output-shaft gears to be capable of rotating integrally therewith; and
one of said first-input-shaft gears for said change-speed stages of said first gear set is positioned between said two second-input-shaft gears of said second gear set in the axial direction of said input shaft.

2. The power transmission apparatus as set forth in claim 1, wherein it further comprises:
a power switcher mechanism that can switch said rotary powers to be capable of being supplied from an internal combustion engine and/or a rotary electric appliance, and that can switch said rotary electric appliance to be supplied from said rotary electric appliance to said input shaft, or to said first output shaft;
said first output shaft comprises a first driven gear being capable of rotating integrally therewith;
said second output shaft comprises a second driven gear being capable of rotating integrally therewith, the second driven gear to be put in place at the same position as that of said first driven gear axially; and
said input shaft comprises a transmission gear being capable of rotating idly thereto, and being put in place at the same position as those of said first driven gear and said second driven gear axially, transmission gear into which said rotary powers from said rotary electric appliance are input by means of said power switcher mechanism, and transmission gear which always meshes with said first driven gear.

3. The power transmission apparatus as set forth in claim 2, wherein it further comprises:
a reverse idler shaft whose axial direction is put in place parallelly to the axial direction of said input shaft; and
a reverse gear set having a reverse change-speed stage, and a change-speed stage selector device:
the reverse change-speed stage comprising: a reverse-handling gear, which is capable of rotating integrally with respect to said input shaft; and a reverse gear, which is disposed so as to be capable of rotating idly with respect to said reverse idler shaft so that it always meshes with said reverse-handling gear;
the change-speed stage selector device comprising: a change-speed stage selection state in which it is capable of moving axially with respect to said reverse idler shaft, and in which it is connected to said reverse gear to be capable of rotating integrally therewith; and a neutral state in which it is not connected to said reverse idler shaft to be capable of rotating integrally therewith; and
said reverse idler shaft comprises a reverse idler gear being capable of rotating integrally therewith, reverse idler gear which always meshes with said first driven gear.

4. The power transmission apparatus as set forth in claim 3, wherein said reverse-handling gear is one of said first-input-shaft gears.

5. The power transmission apparatus as set forth in either one of claims 1 through 4, wherein it further comprises:
a third gear set having a change-speed stage with a change gear ratio that is distinct from those of said first and second gear sets, and a change-speed stage selector device;
the change-speed stage comprising: a third-input-shaft gear being capable of rotating integrally with respect to said input shaft; and a third-output-shaft gear being disposed so as to be capable of rotating idly with respect to said first output shaft so that it always meshes with said third-input-shaft gear;
the change-speed stage selector device comprising: a change-speed stage selection state in which it is capable of moving axially with respect to said first output shaft, and in which it is connected with respect to said third-output-shaft gear to be capable of rotating integrally therewith; and a neutral state in which it is not connected to said third-output-shaft gear to be capable of rotating integrally therewith; and
said third-input-shaft gear is one of said second-input-shaft gears.
